# EUROPÄISCHE PATENTANMELDUNG

(11) **EP 0 961 064 A1**
(43) Veröffentlichungstag der Anmeldung: **01.12.1999**
(21) Anmeldenummer: 97120903.6
(22) Anmeldetag: 28.11.1997
(51) Int. Cl.: F16K 35/14, E03B 7/07, D06F 39/08

(54) **Ventileinrichtung in einer Wasserleitung**

(71) Anmelder: MAITRON CHEMIEFREIE WASSERBEHANDLUNG G.M.B.H., 6020 Innsbruck (AT)
(72) Erfinder: Schwarting, Georg, 86152 Augsburg (DE)

(57) **Zusammenfassung**

Ventileinrichtung in einer Wasserleitung, insbesondere einer Hauptwasserleitung eines Hauses oder einer Wohnung, mit einem elektromagnetisch betätigbaren Schließventil, das von einem Leitungsbypass überbrückt ist, in dem ein Handventil angeordnet ist. Es ist eine Sperreinrichtung (12, 13, 14), die ein Öffnen des Handventiles (10) nur erlaubt, wenn das Schließventil (2) geschlossen ist.

## Beschreibung

Die Erfindung betrifft eine Ventileinrichtung in einer Wasserleitung, insbesondere einer Hauptwasserleitung eines Hauses oder einer Wohnung, mit einem elektromagnetisch betätigbaren Schließventil, das von einem Leitungsbypass überbrückt ist, in dem ein Handventil angeordnet ist.

Solche Ventileinrichtung können insbesondere in Sicherungseinrichtungen zum Einsatz kommen, die ein Überfluten durch ausfließendes Wasser sicherstellen. Eine solche Einrichtung ist beispielsweise in der DE-A1-32 39 363 beschrieben. Ein Feuchtigkeitsfühler in der Nähe des Bodens stellt ausgetretenes Wasser, beispielsweise aus einem beschädigten Haushaltsgerät, wie einem Geschirrspüler oder einer Waschmaschine, fest. Eine Steuereinrichtung schließt daraufhin ein Magnetventil, das in der Hauptwasserleitung als Schließventil angeordnet ist. Unter Hauptwasserleitung wird dabei jene Leitung verstanden, die von außen in ein Haus oder in eine Wohnung gelangt. Günstigerweise wird man das Schließventil in der Nähe dieses Eingangs der Hauptwasserleitung anordnen. Damit bei gesperrtem Schließventil bis zum Eintreffen einer Gebäudeverwaltung oder einer Versicherung dennoch eine Wasserversorgung möglich ist, ist das Schließventil von einem Bypass umgeben, in dem ein öffenbares Handventil angeordnet ist.

Um Fehlbedienungen zu vermeiden, ist erfindungsgemäß eine Sperreinrichtung vorgesehen, die ein Öffnen des Handventiles nur erlaubt, wenn das Schließventil geschlossen ist.

Im Normalbetrieb ist das elektromagnetisch betätigbare Schließventil offen. In dieser Stellung soll ein zusätzliches Öffnen des Handventiles nicht möglich sein, damit es im Störfall beim elektromagnetischen Schließen des Schließventiles tatsächlich zu einer Sperrung der Wasserzufuhr kommt. Erst nachdem das Schließventil geschlossen hat (Störfall) kann nach bewußter Behebung des lokalen Schadens bzw. lokaler Absperrung des beschädigten Gerätes über das Handventil doch eine Wasserversorgung sichergestellt werden.

Besonders günstig ist eine Variante bei der die Sperreinrichtung derart ausgebildet ist, daß sie ein Öffnen des Schließventiles nur dann erlaubt, wenn das Handventil bereits geschlossen ist. Durch diese Maßnahmen ist insgesamt sichergestellt, daß nie beide Ventile, nämlich das elektromagnetisch betätigbare Schließventil einerseits und das Handventil andererseits gleichzeitig offen sein können.

Weitere Vorteile und Einzelheiten der Erfindung werden anhand der nachfolgenden Figurenbeschreibung näher erläutert.

Die Fig. 1 zeigt ein Ausführungsbeispiel der erfindungsgemäßen Ventileinrichtung im Normalbetrieb,
die Fig. 2 zeigt diese Ventileinrichtung im Störfall,
die Fig. 3 zeigt diese Ventileinrichtung im Handbetrieb (nach einem Störfall).

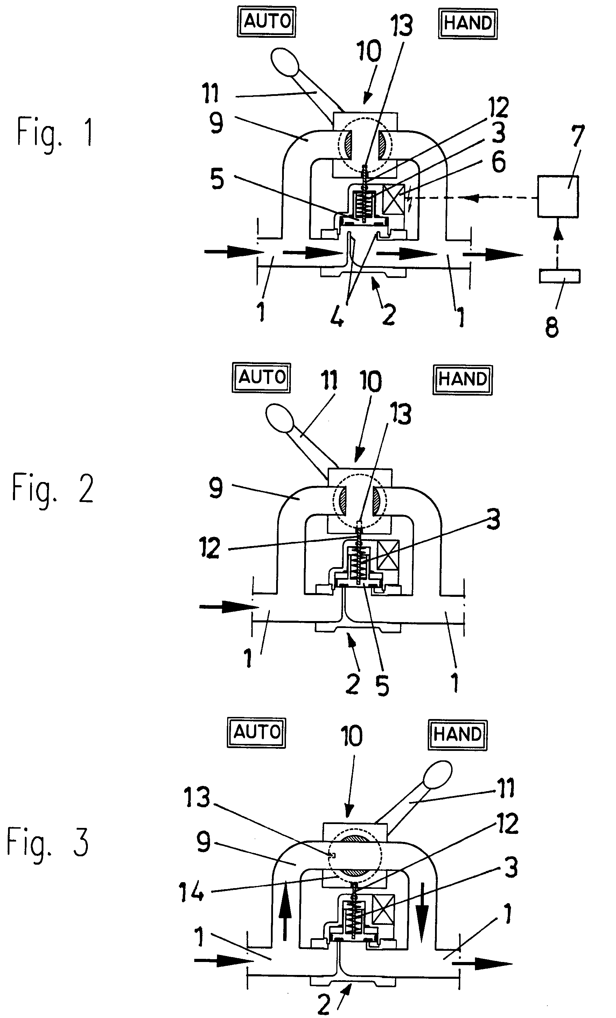

Die in den Fig. 1 bis 3 dargestellte Ventileinrichtung ist vorzugsweise in die Hauptwasserleitung 1 eines Hauses oder einer Wohnung eingebaut. Sie weist ein elektromagnetisch betätigbares Schließventil 2 auf, wobei der Begriff 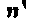 elektromagnetisch betätigbar" weit zu sehen ist. Es kann sich dabei um ein übliches Magnetventil handeln, vorzugsweise um ein solches, das im stromlosen Zustand unter der Wirkung einer Feder 3 geschlossen ist. Es ist aber auch denkbar, daß es sich um ein Ventil handelt, das von einem Elektromotor mit rotierender Welle über eine Antriebseinrichtung betätigbar ist.

Das elektromagnetisch betätigbare Schließventil 2 weist Ventilsitze 4 und einen axial verschiebbaren Ventilkörper 5 auf der mit schematisch angedeuteten Dichtungen versehen sein kann. Wie bereits erwähnt, hält der schematisch angedeutete Elektromagnet 6 das Schließventil 2 entgegen der Federwirkung 3 in geöffnetem Zustand, solange kein Störfall vorliegt.

Es kann eine elektronische Steuereinrichtung für das elektromagnetisch betätigbare Schließventil 2 vorgesehen sein. Diese Steuereinrichtung ist mit der Bezugsziffer 7 bezeichnet und wertet die Signale eines Feuchtigkeitssensors 8 aus. Sollte dieser Feuchtigkeitssensor einen abnormalen Feuchtigkeitswert registrieren, beispielsweise aus einer undichten Geschirrspülmaschine oder aus einer Waschmaschine, macht die elektronische Steuereinrichtung 7 das Schließventil stromlos, worauf dieses unter Wirkung unter Feder 3 in die in Fig. 2 dargestellte Schließstellung geht. Der Wasserfluß in die Wohnung bzw. in das Haus ist vollständig gesperrt, weil auch das im Leitungsbypass 9 vorgesehene Handventil 10 geschlossen ist.

Um vor Eintreffen der Hausverwaltung oder der Versicherung dennoch eine Wasserversorgung zu ermöglichen, nachdem der Schaden lokal behoben worden ist, kann der Leitungsbypass 9 durch Umlegen des Handhebels 11 und Öffnen des Handventiles 10 geöffnet werden.

Das Handventil 10 weist günstigerweise ein händisch betätigbares Stellorgan, wie den dargestellten Handhebel 11 oder ein nicht dargestelltes Handrad, auf, wobei über dieses Stellorgan das Handventil mechanisch öffenbar und schließbar ist. Grundsätzlich wäre es auch denkbar, das Handventil elektrisch über einen lokalen Schalter zu öffnen. Einfacher ist aber sicherlich die direkte mechanische händische Öffnung.

Damit der Handhebel 11 des Handventiles 10 im Normalbetrieb (Fig. nicht in die Stellung des geöffneten Handventiles gebracht werden kann, ist erfindungsgemäß eine Sperreinrichtung vorgesehen, die ein Öffnen des Handventiles 10 nur erlaubt, wenn das Schließventil 2 geschlossen ist (also ausgehend von der in der Fig. 2 gezeigten Stellung in die in Fig. 3 gezeigte Stellung). Das Handventil 10 soll also nur im Störfall und nicht schon vorher öffenbar sein, damit bei Eintreten des Störfalls auch wirklich sicher ist, daß die gesamte Ventileinrichtung absperrt.

Die Sperreinrichtung besteht bei gezeigten Ausführungsbeispiel aus einem Stift 12, der mit dem Ventilkörper 5 des Schließventiles 2 fest verbunden ist. Dieser Stift 12 rastet in eine Ausnehmung 13 am bewegbaren Teil des Handventiles 10 ein und verhindert so ein Verdrehen desselben in der in Fig. 1 gezeigten Stellung.

Bei der in der Fig. 2 gezeigten Stellung (Störfall) ist der Ventilkörper 5 unter Wirkung der Feder 3 nach unten verschoben, wodurch der Stift 12 aus der Ausnehmung 13 ausrastet. Damit kann der Handhebel 11 in die in Fig. 3 gezeigte Stellung verschwenkt werden, womit sich das Handventil öffnet.

Ausgehend von der in Fig. 3 gezeigten Stellung kann das elektromagnetisch betätigbare Schließventil auch von einem Fachmann (beispielsweise dem Hausbesorger, einem zugelassenen Installateur oder einem Versicherungsmann) nur dann in die Offenstellung gemäß Fig. 1 gebracht werden, wenn vorher das Handventil 10 geschlossen ist. In der in Fig. 3 gezeigten Stellung ist ein Öffnen des Schließventiles 2 nicht möglich, weil der Stift 12 an der zylindrischen Anlagefläche 14 des Handventiles 10 anliegt. Erst wenn das Handventil 10 ganz geschlossen ist, kann der Stift 12 der Sperreinrichtung in die Ausnehmung 13 eindringen und somit ein Öffnen des elektromagnetisch betätigbaren Schließventiles 2 erlauben.

Somit ist insgesamt sichergestellt, daß das elektromagnetisch betätigbare Schließventil 2 und das Handventil nur alternativ, nie jedoch gleichzeitig geöffnet sein können.

Abschließend wird noch erwähnt, daß die in Fig. 1 dargestellte Steuereinrichtung 7 und der Feuchtesensor 8 der Übersichtlichkeit halber in den Fig. 2 und 3 nicht dargestellt sind.

## Patentansprüche

1. Ventileinrichtung in einer Wasserleitung, insbesondere einer Hauptwasserleitung eines Hauses oder einer Wohnung, mit einem elektromagnetisch betätigbaren Schließventil, das von einem Leitungsbypass überbrückt ist, in dem ein Handventil angeordnet ist, gekennzeichnet durch eine Sperreinrichtung (12, 13, 14), die ein Öffnen des Handventiles (10) nur erlaubt, wenn das Schließventil (2) geschlossen ist.

2. Ventileinrichtung nach Anspruch 1, dadurch gekennzeichnet, daß die Sperreinrichtung (12, 13, 14) derart ausgebildet ist, daß sie ein Öffnen des Schließventiles (2) nur dann erlaubt, wenn das Handventil (10) geschlossen ist.

3. Ventileinrichtung nach Anspruch 1 oder 2, dadurch gekennzeichnet, daß das Handventil (10) ein händisch betätigbares Stellorgan (11), beispielsweise einen Handhebel oder ein Handrad aufweist, wobei das Handventil (10) über das Stellorgan (11) mechanisch öffenbar und schließbar ist.

4. Ventileinrichtung nach einem der Ansprüche 1 bis 3, dadurch gekennzeichnet, daß das Schließventil (2) automatisch von einer elektronischen Steuereinrichtung (7) geschlossen wird, wenn zumindest ein an die Steuereinrichtung (7) angeschlossener Überwachungssensor, insbesondere Feuchtesensor (8) oder Flüssigkeitssensor, anspricht.

5. Ventileinrichtung nach einem der Ansprüche 1 bis 4, dadurch gekennzeichnet, daß das Schließventil (2) im stromlosen Zustand, vorzugsweise durch Federwirkung, geschlossen ist.

6. Ventileinrichtung nach einem der Ansprüche 1 bis 5, dadurch gekennzeichnet, daß die Sperreinrichtung (12, 13, 14) ein mechanisch mit dem Ventilkörper (5) des Schließventiles (2) gekoppeltes Sperrorgan (12) umfaßt, welches das geschlossene Handventil (10) bei geöffnetem Schließventil (2) in der Schließstellung verrastet und bei geschlossenem Schließventil (2) das Handventil (10) freigibt.

7. Ventileinrichtung nach Anspruch 6, dadurch gekennzeichnet, daß das Sperrorgan ein mit dem Ventilkörper (5) des Schließventiles axial verschiebbarer Stift (12) ist, der bei geöffnetem Schließventil (2) und geschlossenem Handventil (10) in eine korrespondierende Ausnehmung (13) am Handventil (10) einrastet und dieses gegen Öffnen sperrt.

8. Ventileinrichtung nach Anspruch 7, dadurch gekennzeichnet, daß sich neben der Ausnehmung (13) eine geschlossene, vorzugsweise zylindrische Anlagefläche (14) befindet, an den der Stift (12) bei ganz oder teilweise geöffnetem Handventil (10) zur Anlage kommt und so das Schließventil (2) offen hält bis das Handventil (10) vollständig geschlossen ist, wobei der Stift (12) in die Ausnehmung (13) einrasten kann.
